(19) **Europäisches Patentamt European Patent Office Office européen des brevets**

(11) **EP 2 946 183 B1**

(12) **FASCICULE DE BREVET EUROPEEN**

(45) Date de publication et mention de la délivrance du brevet:
**21.09.2016 Bulletin 2016/38**

(21) Numéro de dépôt: **14703149.6**

(22) Date de dépôt: **15.01.2014**

(51) Int Cl.:
***G01K 7/42*** *(2006.01)*

(86) Numéro de dépôt international:
**PCT/FR2014/050071**

(87) Numéro de publication internationale:
**WO 2014/111653 (24.07.2014 Gazette 2014/30)**

(54) **CALCUL DE LA TEMPERATURE D'ELEMENTS D'UN ONDULEUR ALIMENTANT UNE MACHINE ELECTRIQUE**

BERECHNUNG DER TEMPERATUR VON ELEMENTEN EINES WECHSELRICHTERS ZUR STROMVERSORGUNG EINER ELEKTRISCHEN MASCHINE

CALCULATION OF THE TEMPERATURE OF ELEMENTS OF AN INVERTER SUPPLYING POWER TO AN ELECTRICAL MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2013 FR 1350329**

(43) Date de publication de la demande:
**25.11.2015 Bulletin 2015/48**

(73) Titulaire: **Renault S.A.S.**
**92100 Boulogne-Billancourt (FR)**

(72) Inventeurs:
• **DEBERT, Maxime**
  **F-78000 Versailles (FR)**
• **CHEROUAT, Hatem**
  **F-92160 Antony (FR)**

(56) Documents cités:
**JP-A- 2006 238 546    US-A1- 2011 080 124**

**Description**

L'invention concerne le calcul de la température d'éléments d'un onduleur alimentant en énergie électrique une machine électrique.

Les onduleurs permettent de transformer une tension continue, par exemple fournie par une batterie, en une tension alternative. On utilise généralement des onduleurs fournissant trois phases de tension pour alimenter une machine électrique triphasée.

De manière classique, les onduleurs comprennent des diodes et des transistors bipolaires à grille isolée, bien connus de l'homme du métier sous l'acronyme anglo-saxon « IGBT : Insulated-Gate Bipolar Transistor »). Les composants des onduleurs sont généralement disposés de manière à former trois bras correspondant chacun à une phase. Lors du fonctionnement de ces composants, des pertes liées à la conduction électrique et aux commutations apparaissent. De ce fait, la température de ces éléments augmente très fortement lors du fonctionnement de l'onduleur.

Afin d'éviter la détérioration des IGBT et des diodes au dessus d'un seuil de température, on utilise généralement un système de refroidissement dont la puissance de fonctionnement est décidée en fonction de la température des éléments (diodes et IGBT). Il est donc nécessaire d'obtenir une mesure précise des éléments d'un onduleur, afin d'utiliser une puissance de refroidissement appropriée sans gaspiller de l'énergie. En outre, la connaissance de la température des éléments d'un onduleur permet de déterminer s'il est nécessaire de mettre en oeuvre un allégement de régime (« derating » en langue anglaise) du fonctionnement de l'onduleur pour éviter sa détérioration.

Il convient de noter que la température des composants d'un onduleur n'est pas homogène, et qu'elle est plus élevée au voisinage des composants par lesquels beaucoup de puissance électrique circule.

On pourra se référer au document JP2006238546 qui décrit l'utilisation d'un capteur de température pour chacun des trois bras de l'onduleur. Ce document propose également de ne prendre en considération que le capteur correspondant au bras par lequel passe la puissance électrique. Cette solution a notamment pour inconvénient de nécessiter trois capteurs.

Il a également été proposé d'utiliser un procédé de calcul utilisant un modèle à cinq inconnues et qui ne prend pas en considération les variations de températures entre les différents bras. Cette solution a pour inconvénient de nécessiter une puissance importante de calcul.

L'invention a donc pour but de déterminer la température d'éléments d'un onduleur, en réduisant la puissance de calcul et en augmentant la précision du calcul.

Selon un aspect, il est proposé un système de calcul de la température d'éléments d'un onduleur alimentant une machine électrique comprenant une pluralité de transistors bipolaires à grille isolée, une pluralité de diodes et un support de la pluralité de transistors bipolaires à grille isolée et de la pluralité de diodes.

Selon une caractéristique générale, le système comprend un unique capteur de température indiquant la température dudit support, et un calculateur apte à résoudre un ensemble de trois équations thermiques pour la température du transistor bipolaire à grille isolée le plus chaud, pour la température de la diode la plus chaude, et pour la température du support, une cartographie fournissant au calculateur des valeurs de la résistance thermique équivalente entre le transistor bipolaire à grille isolée le plus chaud et le support, et une cartographie fournissant au calculateur des valeurs de la résistance thermique équivalente entre la diode la plus chaude et le support, les deux cartographies ayant pour entrées la position angulaire de la machine électrique et la vitesse de rotation de la machine électrique.

On peut noter que dans la présente demande, le terme résistance thermique vise la résistance thermique par conduction.

On obtient ainsi un système de trois équations à trois inconnues (la température de la diode la plus chaude, la température du transistor bipolaire à grille isolée le plus chaud et la température du support). Un tel système nécessite moins de puissance de calcul pour être résolu.

On peut noter qu'il est plus intéressant de ne connaitre que la température de la diode ou du transistor bipolaire à grille isolée le plus chaud que de connaitre la température de chaque diode et de chaque transistor bipolaire à grille isolée. Cette connaissance est la seule nécessaire pour pouvoir contrôler un éventuel système de refroidissement, ou encore pour mettre en oeuvre un allégement de puissance.

Par ailleurs, en utilisant une cartographie qui fournit des valeurs de résistance thermique équivalente entre le transistor bipolaire à grille isolée le plus chaud et le support, et une cartographie pour les valeurs de résistance thermique équivalente entre la diode la plus chaude et le support, à partir de la position angulaire de la machine électrique et de la vitesse de rotation de la machine électrique, on peut prendre en considération le fait que la position angulaire de la machine électrique correspond à une utilisation des composants d'un bras de l'onduleur. Plus précisément, la puissance électrique dissipée est plus élevée dans le bras de l'onduleur qui est le plus utilisé, et à ce bras correspond une position angulaire.

Des étapes préalables d'identification peuvent être prévues pour obtenir les cartographies.

Le système peut comprendre en outre un dispositif de refroidissement faisant circuler un fluide en contact avec ledit support, le dispositif fournissant au calculateur la valeur du débit du fluide et le système comprend en outre un capteur fournissant au calculateur la température du fluide au voisinage du support.

Le système peut comprendre en outre des cartographies des pertes de puissance liées aux diodes et des pertes de puissance liées aux transistors bipolaires à grille isolée à partir des courants efficaces entre phases, de la tension efficace entre phase et de la tension batterie.

Le calculateur peut comprendre des moyens de comparaison entre une valeur calculée de la température du support et de la température mesurée du support.

Selon un autre aspect, il est proposé un véhicule automobile à traction électrique ou hybride équipé du système tel que décrit ci-avant.

Selon encore un autre aspect, il est proposé un procédé de calcul de la température des éléments d'un onduleur alimentant une machine électrique comprenant une pluralité de transistors bipolaires à grille isolée, une pluralité de diodes et un support de la pluralité de transistors bipolaires à grille isolée et de la pluralité de diodes.

Selon une caractéristique générale, le procédé comprend une mesure de la température dudit support, et une résolution d'un ensemble de trois équations thermiques pour la température du transistor bipolaire à grille isolée le plus chaud, pour la température de la diode la plus chaude, et pour la température du support, et ladite résolution comprenant une acquisition à partir d'une cartographie ayant pour entrées la position angulaire de la machine électrique et la vitesse de rotation de la machine électrique et pour sortie des valeurs de la résistance thermique équivalente entre le transistor bipolaire à grille isolée le plus chaud et le support, et une acquisition à partir d'une cartographie ayant pour entrées la position angulaire de la machine électrique et la vitesse de rotation de la machine électrique et pour sortie des valeurs de la résistance thermique équivalente entre la diode la plus chaude et le support.

Le procédé peut comprendre en outre un refroidissement par circulation d'un fluide en contact avec ledit support, ladite résolution utilisant la valeur du débit du fluide et le procédé comprenant en outre une mesure de la température du fluide au voisinage du support pour ladite résolution.

Le procédé peut comprendre en outre des lectures dans des cartographies des pertes de puissance liées aux diodes et des pertes de puissance liées aux transistors bipolaires à grille isolée.

On peut comparer une valeur calculée de la température du support et la température mesurée du support.

D'autres buts, caractéristiques et avantages apparaîtront à la lecture de la description suivante donnée uniquement en tant qu'exemple non limitatif et faite en référence aux dessins annexés sur lesquels :

- la figure 1 illustre schématiquement un onduleur en vue de dessus comportant trois bras,
- la figure 2 est une vue en coupe et illustre schématiquement un onduleur muni d'un dispositif de refroidissement,
- la figure 3 représente de manière schématique un mode de réalisation selon l'invention.

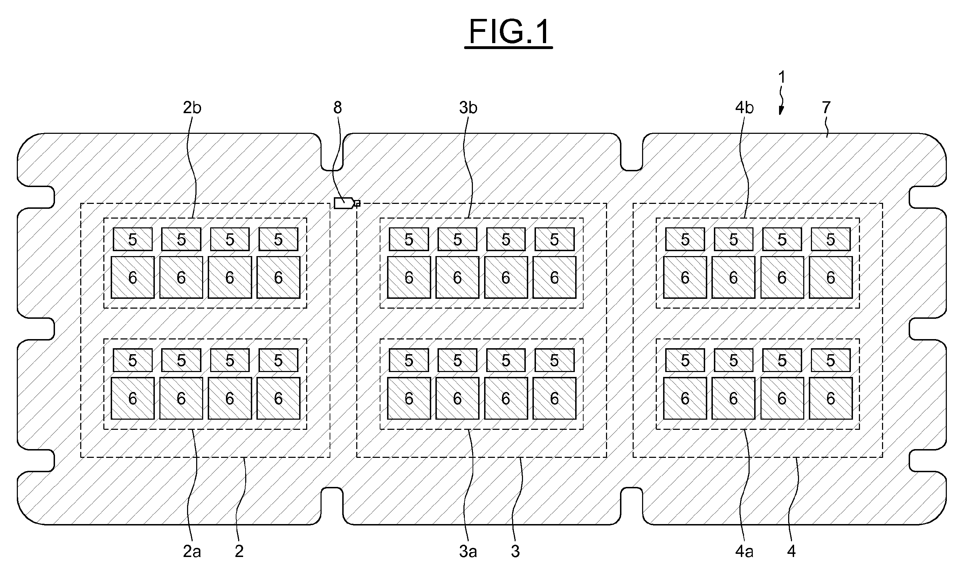

Sur la figure 1, on a représenté un onduleur 1 comportant trois bras 2, 3 et 4. Chacun des bras 2 à 4 est destiné à fournir une phase à une machine électrique tournante triphasée (non représentée ici).

Chacun des bras 2 à 4 comprend une pluralité d'éléments, en particulier des diodes 5 et des transistors bipolaires à grille isolée 6. Les diodes 5 et les transistors bipolaires à grille isolée 6 sont répartis dans deux parties de chaque bras, une partie basse (2a, 3a et 4a sur la figure) et une partie haute (2b, 3b et 4b sur la figure). Les éléments de l'onduleur 1 sont tous montés sur un substrat 7, de préférence un substrat destiné à être utilisé pour recevoir des éléments de puissance, par exemple un substrat bien connu de l'homme du métier sous l'acronyme anglo-saxon « DCB : Direct Copper Bonding ».

Un unique capteur de température 8 est monté sur le substrat 7, ici entre les bras 2 et 3.

Il convient de noter que la température lue au moyen du capteur de température 8 est celle du substrat 7, mais elle n'indique pas la température des diodes 5 et des transistors bipolaires à grille isolée 6, en particulier la température de ces éléments dans le bras 4 le plus éloigné du capteur. En effet, la température peut être plus élevée dans le bras traversé par la puissance électrique.

Il est donc nécessaire de calculer la température de ces éléments, et tout particulièrement la température des éléments les plus chauds d'un onduleur.

On peut ainsi contrôler un dispositif de refroidissement ou encore mettre en oeuvre un allégement de puissance afin de limiter la température maximale des éléments.

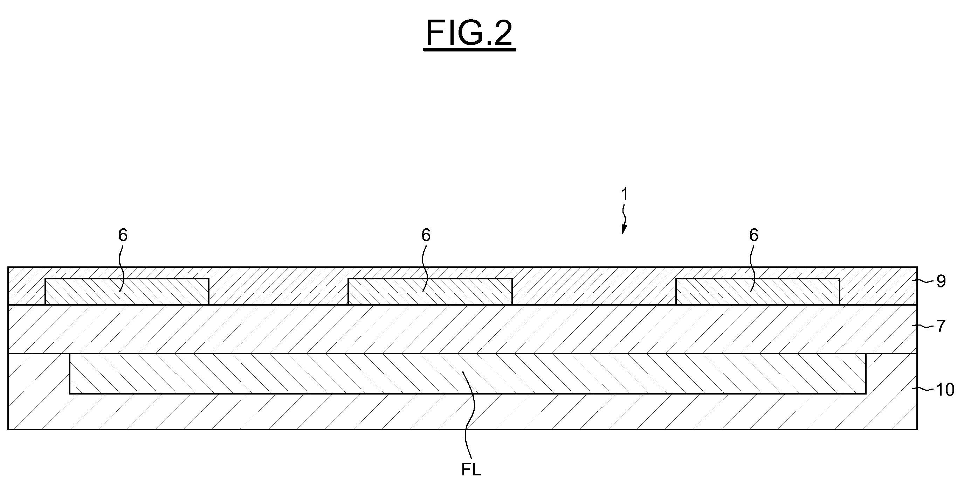

Sur la figure 2, on a représenté schématiquement et en coupe l'onduleur 1. Des éléments tels que des transistors bipolaires à grille isolée 6 sont représentés sur la figure, disposés sur un substrat 7.

On peut encapsuler les transistors bipolaires à grille isolée et les diodes qui forment l'onduleur dans un gel 9 ou une résine de protection.

Sur la face du substrat opposée à celle supportant les diodes 5 et les transistors bipolaires à grille isolée, on peut faire circuler un fluide de refroidissement au moyen d'un dispositif de refroidissement (non représenté sur la figure). Sur la figure, on utilise une conduite 10 formée pour permettre la circulation d'un fluide FL (par exemple de l'eau) dans une direction perpendiculaire à la figure. Le fluide FL est directement en contact avec le substrat 7.

Il est possible de connaitre le débit du fluide FL qui peut être fournit directement par le dispositif de refroidissement, et il est possible de mesurer la température de ce fluide en utilisant un capteur de température (non représenté sur la figure).

Pour un onduleur alimentant un moteur électrique de véhicule automobile, on peut utiliser un calculateur du véhicule pour calculer la température des éléments de l'onduleur 1, par exemple une unité de commande électronique déjà présente dans le véhicule.

Ce calculateur peut être apte à résoudre un ensemble de trois équations thermiques pour la température du transistor bipolaire à grille isolée le plus chaud, pour la température de la diode la plus chaude, et pour la température du support.

Au vu des figures 1 et 2, il est possible d'établir l'ensemble de trois équations thermiques pour un onduleur comportant des diodes, des transistors bipolaires à grille isolée et un système de refroidissement comme indiqué dans les équations suivantes :

$$\dot{T}_{IGBT} = \frac{P_{loss\_IGBT}}{R_{IGBT}} + \frac{T_{DIODE} - T_{IGBT}}{R_{IGBT \rightarrow DIODE}} + \frac{T_{cool} - T_{IGBT}}{R_{cool \rightarrow IGBT}(\Phi)}$$

$$\dot{T}_{DIODE} = \frac{P_{loss\_DIODE}}{R_{DIODE}} + \frac{T_{IGBT} - T_{DIODE}}{R_{IGBT \rightarrow DIODE}} + \frac{T_{cool} - T_{DIODE}}{R_{cool \rightarrow DIODE}(\Phi)}$$

$$\dot{T}_{DCB} = \frac{T_{IGBT} - T_{DCB}}{R_{IGBT \rightarrow DCB}(\theta, \omega)} + \frac{T_{DIODE} - T_{DCB}}{R_{DIODE \rightarrow DCB}(\theta, \omega)} + \frac{T_{cool} - T_{DCB}}{R_{cool \rightarrow DCB}(\Phi)}$$

$$EQ1$$

Avec :

$T_{IGBT}$ la température du transistor bipolaire à grille isolée le plus chaud,
$T_{DIODE}$ la température de la diode la plus chaude,
$T_{DCB}$ la température du support,
$T_{cool}$ la température du fluide de refroidissement,
$P_{loss\_IGBT}$ les pertes liées à un transistor bipolaire à grille isolée le plus chaud,
$P_{loss\_DIODE}$ les pertes liées à une diode la plus chaude,
$R_{IGBT}$ la résistance thermique équivalente d'un transistor bipolaire à grille isolée,
$R_{IGBT \rightarrow DIODE}$ la résistance thermique équivalente de conduction entre une diode et un transistor bipolaire à grille isolée,
$R_{cool \rightarrow IGBT}(\Phi)$ la résistance thermique équivalente de conduction entre le fluide de refroidissement et un transistor bipolaire à grille isolée le plus chaud, en fonction du débit du fluide $\Phi$,
$R_{cool \rightarrow DIODE}(\Phi)$ la résistance thermique équivalente de conduction entre le fluide de refroidissement et une diode la plus chaude, en fonction du débit du fluide $\Phi$,
$R_{IGBT \rightarrow DCB}(\theta, \omega)$ la résistance équivalente de conduction entre le transistor bipolaire à grille isolée le plus chaud et le support, en fonction de la position angulaire de la machine électrique $\theta$ et de la vitesse de rotation $\omega$ de la machine électrique, et
$R_{DIODE \rightarrow DCB}(\theta, \omega)$ la résistance équivalente de conduction entre la diode la plus chaude et le support, en fonction de la position angulaire de la machine électrique $\theta$ et de la vitesse de rotation $\omega$ de la machine électrique.

Les différents termes des trois équations peuvent être connus par des étapes préalables d'identification.

Aussi, on peut connaitre le débit du fluide $\Phi$ qui peut avantageusement être directement fournit par le dispositif de refroidissement.

La température du fluide de refroidissement peut également être connue au moyen d'un capteur de température. Tel est également le cas de la température du support $T_{DCB}$ qui peut être connue grâce au capteur 8 décrit en se référant à la figure 1.

On peut noter que de manière classique, les pertes liées à un transistor bipolaire à grille isolée $P_{loss\_IGBT}$ sont connues et sont dues aux pertes par commutation et par conduction. Tel est également le cas des pertes liées à une diode $P_{loss\_DIODE}$. De manière classique, on peut lire les pertes $P_{loss\_DIODE}$ et $P_{loss\_IGBT}$ dans des cartographies ayant pour entrée la tension de la batterie alimentant l'onduleur, la tension efficace entre les phases de l'onduleur et le courant efficace entre les phases de l'onduleur.

De manière classique, les valeurs $R_{cool \rightarrow IGBT}(\Phi)$ de résistances thermiques équivalentes de conduction entre le fluide de refroidissement et un transistor bipolaire à grille isolée le plus chaud et les valeurs $R_{cool \rightarrow DIODE}(\Phi)$ de

résistances thermiques équivalentes de conduction entre le fluide de refroidissement et une diode peuvent être calculées au moyen d'un modèle thermique semi-empirique ou par identification ou par calibration.

Les deux résistances thermiques $R_{IGBT \to DCB}(\theta, \omega)$ et $R_{DIODE \to DCB}(\theta, \omega)$ sont lues dans des cartographies obtenues par des étapes préalables d'identification ou de calibration.

On peut noter qu'il est possible de réécrire le système de trois équations sous une forme matricielle :

$$\dot{X} = A_c X + B_c U$$

$$EQ2$$

Avec :

$$X = \begin{bmatrix} T_{IGBT} \\ T_{DIODE} \\ T_{DCB} \end{bmatrix},$$

$$A_c = \begin{bmatrix} \dfrac{-1}{R_{IGBT \to DIODE}} + \dfrac{-1}{R_{cool \to IGBT}(\Phi)} & \dfrac{1}{R_{IGBT \to DIODE}} & 0 \\[2ex] \dfrac{1}{R_{IGBT \to DIODE}} & \dfrac{-1}{R_{IGBT \to DIODE}} + \dfrac{-1}{R_{cool \to DIODE}(\Phi)} & 0 \\[2ex] \dfrac{1}{R_{IGBT \to DCB}(\theta, \omega)} & \dfrac{1}{R_{DIODE \to DCB}(\theta, \omega)} & \dfrac{-1}{R_{IGBT \to DCB}(\theta, \omega)} + \dfrac{-1}{R_{DIODE \to DCB}(\theta, \omega)} + \dfrac{-1}{R_{cool \to DCB}(\Phi)} \end{bmatrix},$$

$$U = \begin{bmatrix} \dfrac{P_{loss\_IGBT}}{R_{IGBT}} \\[2ex] \dfrac{P_{loss\_Diode}}{R_{DIODE}} \\[2ex] T_{cool} \end{bmatrix}, \text{ et}$$

$$B_c = \begin{bmatrix} 1 & 0 & \dfrac{1}{R_{cool \to IGBT}(\Phi)} \\[2ex] 0 & 1 & \dfrac{1}{R_{cool \to DIODE}(\Phi)} \\[2ex] 0 & 0 & \dfrac{1}{R_{cool \to DCB}(\Phi)} \end{bmatrix}$$

Afin de faciliter la résolution du calcul par un calculateur, il est possible de mettre en oeuvre une discrétisation. On facilite ainsi cette résolution en particulier pour les dérivées par rapport au temps. On pourra par exemple mettre en oeuvre une discrétisation d'Euler :

$$\dot{x}(t) = \frac{x_{k+1} - x_k}{t_s}$$

Avec :

x une variable (par exemple une des températures),
k un indice de temps discret, et
$t_s$ la période d'échantillonnage du calculateur.

Il est possible de réécrire l'équation matricielle EQ2 :

$$\begin{cases} \dot{X}_{k+1} = AX_k + BU_k \\ Y_k = CX_k \end{cases}$$

$$EQ3$$

Avec :

$A = I + t_s A_c$,
$B = IB_c$,
$C = [0\ 0\ 1]$, et
I étant la matrice identité.

La matrice $Y_k$ correspond à l'estimation des états que l'on souhaite observer, la matrice C étant une matrice de mesure correspondant à la seule température qui peut être mesurée ici, celle du capteur 8 donnant $T_{DCB}$.

Il est néanmoins préférable de mettre en oeuvre une comparaison entre les résultats obtenus par la résolution du système et ceux mesurés (pour la température $T_{DCB}$). Une telle comparaison peut permettre de corriger le modèle présenté ci-avant (EQ3), par exemple de la manière suivante :

$$\begin{cases} \dot{\hat{X}}_{k+1} = A\hat{X}_k + BU_k + K(Y_k - \hat{Y}_k) \\ \hat{Y}_k = C\hat{X}_k \end{cases}$$

$$EQ4$$

Avec le signe« ^ » indiquant que la variable est celle obtenue par le calculateur. La valeur K est choisie telle qu'elle assure la convergence et la stabilité de l'observation. L'homme du métier peut, par exemple, s'appuyer sur les théorie de Luenberger ou Kalman pour trouver sa valeur.

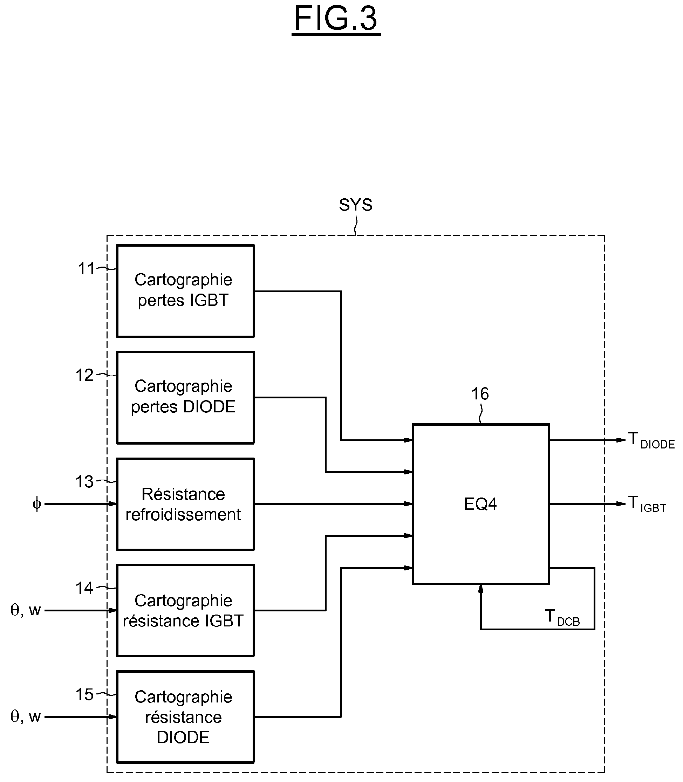

Sur la figure 3, on a représenté de manière schématique un système SYS selon l'invention.

Ce système comprend une cartographie 11 dans laquelle on peut lire des valeurs de pertes $P_{loss\_IGBT}$ liées à un transistor bipolaire à grille isolée. La cartographie 11 peut avoir pour entrée la tension de la batterie alimentant l'onduleur, la tension efficace entre les phases de l'onduleur et le courant efficace entre les phases de l'onduleur.

Le système SYS comprend également une cartographie 12 dans laquelle on peut lire des valeurs de pertes $P_{loss\_DIODE}$ liées à une diode. La cartographie 12 peut avoir pour entrée la tension de la batterie alimentant l'onduleur, la tension efficace entre les phases de l'onduleur et le courant efficace entre les phases de l'onduleur.

Le système comprend des moyens 13 de détermination des valeurs $R_{cool \rightarrow IGBT}(\Phi)$ de résistances thermiques équivalentes de conduction entre le fluide de refroidissement et un transistor bipolaire à grille isolée le plus chaud et les valeurs $R_{cool \rightarrow DIODE}(\Phi)$ de résistances thermiques équivalentes de conduction entre le fluide de refroidissement et une diode, par exemple au moyen d'un modèle thermique ayant pour entrée le débit $\Phi$.

Deux autres cartographies 14 et 15 permettent de lire les deux résistances thermiques $R_{IGBT \rightarrow DCB}(\theta, \omega)$ et $R_{DIODE \rightarrow DCB}(\theta, \omega)$ à partir de la position angulaire $\theta$ de la machine électrique et de la vitesse de rotation $\omega$.

Les valeurs $R_{IGBT \rightarrow DCB}(\theta, \omega)$, $R_{DIODE \rightarrow DCB}(\theta, \omega)$, $P_{loss\_DIODE}$, $P_{loss\_IGBT}$, $R_{cool \rightarrow DIODE}(\Phi)$ et $R_{cool \rightarrow IGBT}(\Phi)$ sont fournies à un calculateur 16 apte par exemple à résoudre le système EQ4.

On obtient en sortie les températures $T_{DIODE}$ et $T_{IGBT}$ correspondant aux éléments les plus chauds de l'onduleur. On peut ainsi mettre en oeuvre un allégement de puissance ou ajuster la puissance du dispositif de refroidissement.

Grâce à l'invention, on obtient un calcul précis de la température des éléments d'un onduleur alimentant une machine électrique, en utilisant un seul capteur de température sur l'onduleur.

L'invention permet donc d'obtenir un système plus simple et moins onéreux que ceux décrits dans l'art antérieur utilisant trois capteurs.

**Revendications**

**1.** Système de calcul de la température d'éléments d'un onduleur (1) alimentant une machine électrique comprenant une pluralité de transistors bipolaires à grille isolé (6), une pluralité de diodes (5) et un support (7) de la pluralité de transistors bipolaires à grille isolée et de la pluralité de diodes,
**caractérisé en ce que** ledit système comprend :

- un unique capteur de température (8) indiquant la température dudit support ($T_{DCB}$), et
- un calculateur apte à résoudre un ensemble de trois équations thermiques pour la température du transistor bipolaire à grille isolée le plus chaud ($T_{IGBT}$), pour la température de la diode la plus chaude ($T_{DIODE}$), et pour la température du support,
- une cartographie fournissant au calculateur des valeurs de la résistance thermique équivalente entre le transistor bipolaire à grille isolée le plus chaud et le support ($R_{IGBT \rightarrow DCB}(\theta, \omega)$), et
- une cartographie fournissant au calculateur des valeurs de la résistance thermique équivalente entre la diode la plus chaude et le support ($R_{DIODE \rightarrow DCB}(\theta, \omega)$), les deux cartographies ayant pour entrées la position angulaire de la machine électrique ($\theta$) et la vitesse de rotation de la machine électrique ($\omega$).

2. Système selon la revendication 1, comprenant en outre un dispositif de refroidissement faisant circuler un fluide (FL) en contact avec ledit support, le dispositif fournissant au calculateur la valeur du débit du fluide ($\Phi$) et le système comprenant en outre un capteur fournissant au calculateur la température du fluide ($T_{cool}$) au voisinage du support.

3. Système selon la revendication 1 ou 2, comprenant en outre des cartographies des pertes de puissance liées aux diodes ($P_{loss\_DIODE}$) et des pertes de puissance liées aux transistors bipolaires à grille isolée ($P_{loss\_IGBT}$).

4. Système selon l'une quelconque des revendications 1 à 3, dans lequel le calculateur comprend des moyens de comparaison entre une valeur calculée de la température du support et la température mesurée du support.

5. Véhicule automobile à traction électrique ou hybride équipé d'un système selon l'une quelconque des revendications précédentes.

6. Procédé de calcul de la température des éléments d'un onduleur (1) alimentant une machine électrique comprenant une pluralité de transistors bipolaires à grille isolée (6), une pluralité de diodes (5) et un support (7) de la pluralité de transistors bipolaires à grille isolée et de la pluralité de diodes,
**caractérisé en ce que** ledit procédé comprend une mesure de la température dudit support ($T_{DCB}$), et une résolution d'un ensemble de trois équations thermiques pour la température du transistor bipolaire à grille isolée le plus chaud ($T_{IGBT}$), pour la température de la diode la plus chaude ($T_{DIODE}$), et pour la température du support, ladite résolution comprenant :

- une acquisition à partir d'une cartographie ayant pour entrées la position angulaire de la machine électrique ($\theta$) et la vitesse de rotation de la machine électrique ($\omega$) et pour sortie des valeurs de la résistance thermique équivalente entre le transistor bipolaire à grille isolée le plus chaud et le support ($R_{IGBT \rightarrow DCB}(\theta, \omega)$), et
- une acquisition à partir d'une cartographie ayant pour entrées la position angulaire de la machine électrique et la vitesse de rotation de la machine électrique et pour sortie des valeurs de la résistance thermique équivalente entre la diode la plus chaude et le support ($R_{DIODE \rightarrow DCB}(\theta, \omega)$).

7. Procédé selon la revendication 6, comprenant en outre un refroidissement par circulation d'un fluide en contact avec ledit support, ladite résolution utilisant la valeur du débit du fluide ($\Phi$) et le procédé comprenant en outre une mesure de la température du fluide ($T_{cool}$) au voisinage du support pour ladite résolution.

8. Procédé selon la revendication 6 ou 7, comprenant en outre des lectures dans des cartographies des pertes de puissance liées aux diodes ($P_{loss\_DIODE}$) *et* des pertes de puissance liées aux transistors bipolaires à grille isolée ($P_{loss\_IGBT}$).

9. Procédé selon l'une quelconque des revendications 6 à 8, dans lequel on compare une valeur calculée de la température du support et la température mesurée du support.

**Patentansprüche**

1. System zur Berechnung der Temperatur von Elementen eines Wechselrichters (1) zur Stromversorgung einer elektrischen Maschine, aufweisend mehrere Isolierschicht-Bipolartransistoren (6), mehrere Dioden (5) und einen Träger (7) der mehreren Isolierschicht-Bipolartransistoren und mehreren Dioden,
**dadurch gekennzeichnet, dass** das System Folgendes aufweist:

- einen einzigen Temperaturfühler (8), der die Temperatur des Trägers ($T_{DCB}$) angibt, und
- einen Rechner, der fähig ist, eine Gesamtheit von drei thermischen Gleichungen für die Temperatur des heißesten Isolierschicht-Bipolartransistors ($T_{IGBT}$), für die Temperatur der heißesten Diode ($T_{DIODE}$) und für die Temperatur des Trägers aufzulösen,
- eine Kartographie, die den Rechner mit Werten des äquivalenten thermischen Widerstands zwischen dem heißesten Isolierschicht-Bipolartransistor und dem Träger ($R_{IGBT\text{-}DCB}(\theta,\omega)$) versorgt, und
- eine Kartographie, die den Rechner mit Werten des äquivalenten thermischen Widerstands zwischen der heißesten Diode und dem Träger ($R_{DIODE\rightarrow DCB}(\theta,\omega)$) versorgt, wobei die beiden Kartographien als Eingangswerte die Winkelposition der elektrischen Maschine ($\theta$) und die Drehzahl der elektrischen Maschine ($\omega$) aufweisen.

2. System nach Anspruch 1, ferner aufweisend eine Kühlvorrichtung, die ein Fluid (FL) in Kontakt mit dem Träger zirkulieren lässt, wobei die Vorrichtung den Rechner mit dem Wert des Fluiddurchsatzes ($\Phi$) versorgt und wobei das System ferner einen Sensor umfasst, der den Rechner mit der Temperatur des Fluids ($T_{cool}$) in der Nähe des Trägers versorgt.

3. System nach Anspruch 1 oder 2, ferner aufweisend Kartographien der Leistungsverluste, die mit den Dioden ($P_{loss\_DIODE}$) zusammenhängen und der Leistungsverluste, die mit den Isolierschicht-Bipolartransistoren ($P_{loss\_IGBT}$) zusammenhängen.

4. System nach einem der Ansprüche 1 bis 3, wobei der Rechner Vergleichseinrichtungen zwischen einem berechneten Wert der Temperatur des Trägers und der gemessenen Temperatur des Trägers aufweist.

5. Kraftfahrzeug mit Elektroantrieb oder Hybridantrieb, das mit einem System nach einem der vorhergehenden Ansprüche ausgestattet ist.

6. Verfahren zur Berechnung der Temperatur der Elemente eines Wechselrichters (1) zur Stromversorgung einer elektrischen Maschine, aufweisend mehrere Isolierschicht-Bipolartransistoren (6), mehrere Dioden (5) und einen Träger (7) der mehreren Isolierschicht-Bipolartransistoren und mehreren Dioden,
**dadurch gekennzeichnet, dass** das Verfahren eine Messung der Temperatur des Trägers ($T_{DCB}$) und eine Auflösung einer Gesamtheit von drei thermischen Gleichungen für die Temperatur des heißesten Isolierschicht-Bipolartransistors ($T_{IGBT}$) für die Temperatur der heißesten Diode ($T_{DIODE}$) und für die Temperatur des Trägers aufweist, wobei die Auflösung Folgendes aufweist:

- eine Erfassung aus einer Kartographie, die als Eingangswerte die Winkelposition der elektrischen Maschine ($\theta$) und die Drehzahl der elektrischen Maschine ($\omega$) aufweist, und die als Ausgangswerte Werte des äquivalenten thermischen Widerstands zwischen dem heißesten Isolierschicht-Bipolartransistor und dem Träger ($R_{IGBT\text{-}DCB}(\theta,\omega)$) aufweist, und
- eine Erfassung aus einer Kartographie, die als Eingangswerte die Winkelposition der elektrischen Maschine und die Drehzahl der elektrischen Maschine aufweist, und die als Ausgangswerte Werte des äquivalenten thermischen Widerstands zwischen der heißesten Diode und dem Träger ($R_{DIODE\rightarrow DCB}(\theta,\omega)$) aufweist.

7. Verfahren nach Anspruch 6, ferner aufweisend eine Kühlung durch Zirkulieren eines Fluids in Kontakt mit dem Träger, wobei die Auflösung den Wert des Fluiddurchsatzes ($\Phi$) verwendet und wobei das Verfahren ferner eine Messung der Temperatur des Fluids ($T_{cool}$) in der Nähe des Trägers für die Auflösung aufweist.

8. Verfahren nach Anspruch 6 oder 7, ferner aufweisend Ablesungen aus Kartographien der Leistungsverluste, die mit den Dioden ($P_{loss\_DIODE}$) zusammenhängen und der Leistungsverluste, die mit den Isolierschicht-Bipolartransistoren ($P_{loss\_IGBT}$) zusammenhängen.

9. Verfahren nach einem der Ansprüche 6 bis 8, wobei ein berechneter Wert der Temperatur des Trägers und die gemessene Temperatur des Trägers verglichen werden.

**Claims**

1. System for the calculation of the temperature of elements of an inverter (1) supplying power to an electrical machine comprising a plurality of insulated-gate bipolar transistors (6), a plurality of diodes (5) and a support (7) for the plurality of insulated-gate bipolar transistors and the plurality of diodes, **characterized in that** said system comprises:

   - a single temperature sensor (8) indicating the temperature of said support ($T_{DCB}$), and
   - a computer which is designed to resolve a series of three thermal equations giving the temperature of the hottest insulated-gate bipolar transistor ($T_{IGBT}$), the temperature of the hottest diode ($T_{DIODE}$), and the temperature of the support,
   - a mapping function which supplies the computer with values for the equivalent thermal resistance between the hottest insulated-gate bipolar transistor and the support ($R_{IGBT \to DCB}(\theta,\omega)$), and
   - a mapping function which supplies the computer with values for the equivalent thermal resistance between the hottest diode and the support ($R_{DIODE \to DCB}(\theta,\omega)$), wherein the inputs for the two mapping functions are the angular position of the electrical machine ($\theta$) and the speed of rotation of the electrical machine ($\omega$).

2. System according to Claim 1, also comprising a cooling device for the circulation of a fluid (FL) in contact with said support, wherein the device supplies the computer with the fluid flow rate value ($\Phi$), and the system also comprises a sensor for the supply to the computer of the fluid temperature ($T_{cool}$) in the vicinity of the support.

3. System according to Claim 1 or Claim 2, also comprising mapping functions for power losses associated with the diodes ($P_{loss\_DIODE}$) and for power losses associated with the insulated-gate bipolar transistors ($P_{loss\_IGBT}$).

4. System according to any one of Claims 1 to 3, wherein the computer comprises means for the comparison of a calculated value for the temperature of the support with the measured temperature of the support.

5. Motor vehicle with electric or hybrid drive, equipped with a system according to any one of the preceding claims.

6. Method for the calculation of the temperature of elements of an inverter (1) supplying power to an electrical machine comprising a plurality of insulated-gate bipolar transistors (6), a plurality of diodes (5) and a support (7) for the plurality of insulated-gate bipolar transistors and the plurality of diodes, **characterized in that** said method comprises a measurement of the temperature of said support ($T_{DCB}$), and the resolution of a series of three thermal equations giving the temperature of the hottest insulated-gate bipolar transistor ($T_{IGBT}$), the temperature of the hottest diode ($T_{DIODE}$), and the temperature of the support, said resolution comprising:

   - data acquisition from a mapping function, the inputs of which are the angular position of the electrical machine ($\theta$) and the speed of rotation of the electrical machine ($\omega$), and the output of which delivers values for the equivalent thermal resistance between the hottest insulated-gate bipolar transistor and the support ($R_{IGBT \to DCB}(\theta,\omega)$), and
   - data acquisition from a mapping function, the inputs of which are the angular position of the electrical machine and the speed of rotation of the electrical machine, and the output of which delivers values for the equivalent thermal resistance between the hottest diode and the support ($R_{DIODE\text{-}DCB}(\theta,\omega)$).

7. Method according to Claim 6, also comprising a cooling function by the circulation of fluid in contact with said support, wherein said resolution uses the fluid flow rate value ($\Phi$) and the method also comprises a measurement of the fluid temperature ($T_{cool}$) in the vicinity of the support, for the purposes of said resolution.

8. Method according to Claim 6 or 7, also comprising readings by the mapping functions of power losses associated with the diodes ($P_{loss\_DIODE}$) and of power losses associated with the insulated-gate bipolar transistors ($P_{loss\_IGBT}$).

9. Method according to any one of Claims 6 to 8, wherein a calculated value for the temperature of the support is compared with the measured temperature of the support.

# FIG.1

FIG.2

# FIG.3

SYS

11 — Cartographie pertes IGBT

12 — Cartographie pertes DIODE

13 — Résistance refroidissement

φ

14 — Cartographie résistance IGBT

θ, w

15 — Cartographie résistance DIODE

θ, w

16

EQ4

$T_{DIODE}$

$T_{IGBT}$

$T_{DCB}$

**EP 2 946 183 B1**

## RÉFÉRENCES CITÉES DANS LA DESCRIPTION

**Documents brevets cités dans la description**

- JP 2006238546 B